# EUROPEAN PATENT APPLICATION

(11) **EP 4 606 285 A1**
(43) Date of publication of application: **27.08.2025**
(21) Application number: 24425003.1
(22) Date of filing: 22.02.2024
(51) Int. Cl.: A47J 45/06, A47J 45/07, A47J 45/08

(54) **HANDLE FOR A COOKING CONTAINER**

(71) Applicant: La Termoplastic F.B.M. - S.r.l., 21010 Arsago Seprio (Varese) (IT)
(72) Inventor: MUNARI, Marco, 21010 Cardano al Campo (VA) (IT)
(74) Representative: Branca, Emanuela

(57) **Abstract**

A handle (1) for a cooking container, comprising a grip element (2) made of a thermoplastic polymer and a protection element (3) made of a thermosetting polymer, the grip element (2) having a grip portion (21) configured to be grasped and a connection portion (22) reversibly coupled to the protection element (3) such that the connection portion (22) is enclosed by the protection element (3), said protection element (3) being configured to be reversibly coupled to the container.

## Description

The present invention relates to a handle for a cooking container, and in particular to a handle that can be reversibly coupled to a pan or pot.

In the field of kitchenware, handles that can be reversibly coupled to cooking containers such as frying pans or pots have long been known. Such a handle can usually be coupled to the relevant cooking container by means of a screw that passes through a connection portion of the handle and engages a corresponding threaded seat formed on the external surface of the container: this seat usually consists of a threaded nut attached to the external surface of the container.

Since the connection portion of the handle is in direct contact with the cooking container, which heats up during use for example on a cooker, and this portion is also close to the cooker itself, the handle is usually made of a thermosetting polymer, e.g. Bakelite, so that it bears high temperatures without compromising its mechanical characteristics and appearance.

However, thermosetting polymers, and Bakelite in particular, are not generally recyclable. Therefore, once the life cycle of the cooking container is over, the relative handle must necessarily be disposed of as undifferentiated waste, with the well-known disadvantages of undifferentiated waste treatment (incineration and/or landfill), i.e. increased polluting emissions, with no possibility, for instance, of reusing this material to make a new handle.

On the other hand, a handle made of a thermoplastic polymer would be recyclable and in turn obtainable from recycled material, but it would not bear high temperatures and would already get damaged upon first use, making it unusable and potentially exposing the user to burns and toxic vapours.

The object of the present invention is to overcome the above-mentioned drawbacks, and in particular to make a handle for a cooking container that is durable, safe to use, cost-effective to manufacture, and with a limited environmental impact at the end of its service life. This and other results can be obtained according to the present invention by making a handle according to claim 1.

Further characteristics of the handle are the object of the dependent claims.

The present invention will now be described, by way of an illustrative, though non-limiting example, according to preferred embodiments thereof, with reference to the figures in the attached drawings, wherein:
- Figure 1 is a side view of a handle according to the invention in a first embodiment;
- Figure 2 is a top view of Figure 1;
- Figure 3 is a section view of Figure 2 along the line III-III;
- Figure 4 is an exploded three-dimensional view of Figure 1;
- Figure 5 is a three-dimensional view of Figure 4 from a different perspective;
- Figure 6 is an enlarged view of a detail of Figure 5;
- Figure 7 is a three-dimensional perspective view of a handle according to the invention in a second embodiment. Referring to Figure 1, a handle according to the invention in a first embodiment adapted to be coupled to a pan (not shown in the figures) is globally referred to as 1.

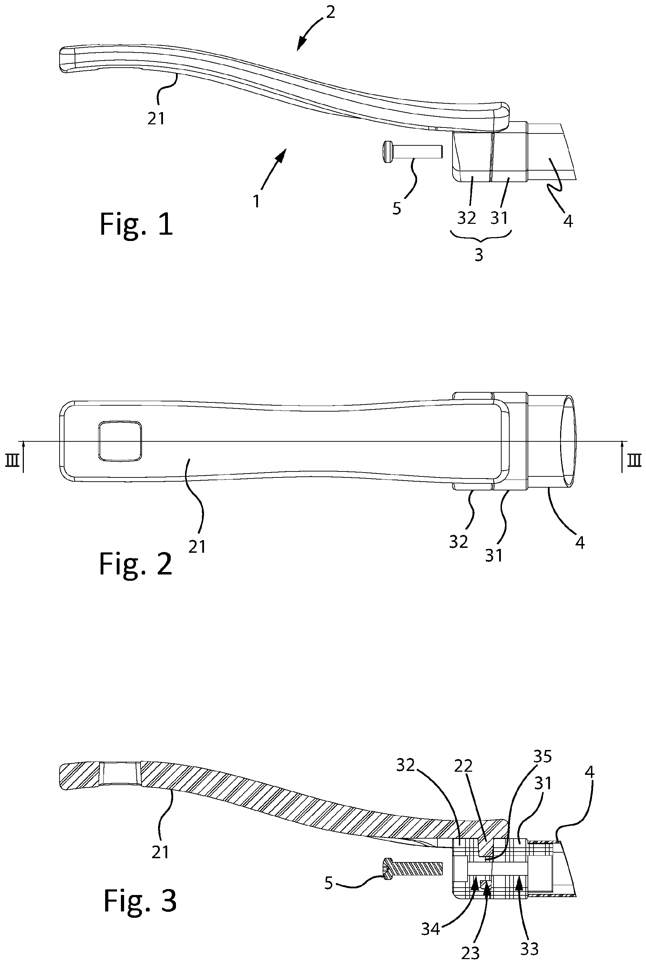

The handle 1 comprises a grip element 2 made of a thermoplastic polymer and comprising a grip portion 21 which can be grasped and a connection portion 22 (visible in Figures 3, 4 and 5), and a protection element 3 made of a thermosetting polymer. The handle 1 further comprises a screw 5 configured to reversibly couple the connection portion 22 of the grip element 2 and the protection element 3 to each other, and preferably also to couple the grip element 2 and the protection element 3 to the pan. The handle 1 also comprises a metal ferrule 4, the screw 5 being preferably also configured to reversibly couple the ferrule 4 to the protection element 3 and the pan.

In detail, the protection element 3 consists of a first jaw 31 and a second jaw 32, which can be reversibly coupled to the grip element 2 and to the pan by means of the screw 5, clamping therebetween the connection portion 22 of the grip element 2. Thus, the connection portion 22 is reversibly coupled to the protection element 3 and entirely enclosed by the protection element 3 itself, while the protection element 3 can be reversibly coupled to the pan by means of the same screw 5.

As a result, the connection portion 22, which is the part made of a thermoplastic polymer closest to the pan and cooker during use and therefore most at risk of being damaged from exposure to high temperatures, is fully protected against the risk of excessive heating by a shell of a thermosetting material that encloses it completely, while still being solidly coupled to the pan allowing use thereof.

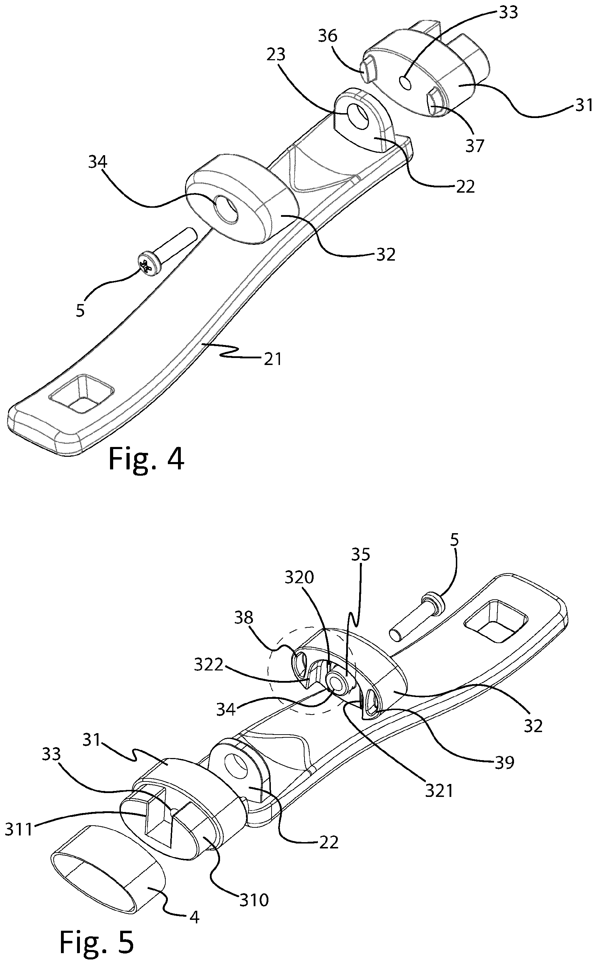

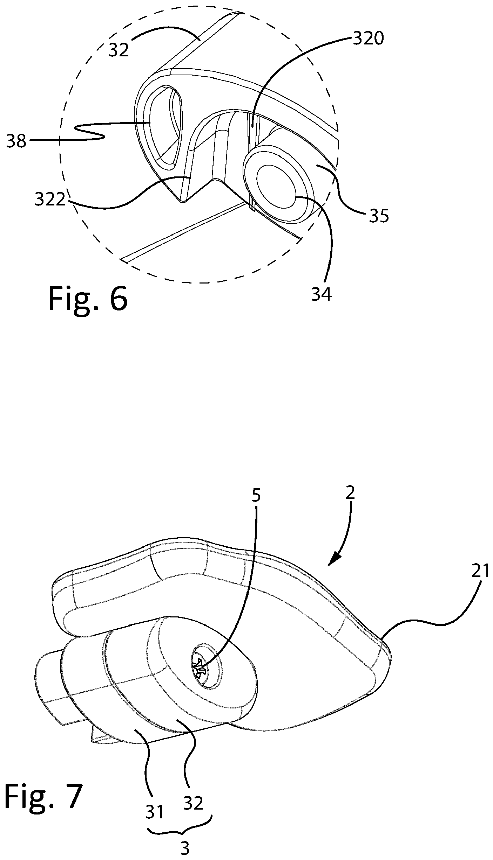

Preferably, the protection element 3 is made entirely of Bakelite, so that it bears high temperatures without compromising the mechanical properties and appearance. Referring to Figures 5 and 6, the protection element 3 comprises a housing seat 322 configured to form-fitting house the connection portion 22 of the grip element 2, thereby enclosing it. In particular, the housing seat 322 is made entirely on the surface of the second jaw 32 that is intended to face in use the first jaw 31 (hereinafter referred to as the abutment surface of the second jaw 32).

Referring to Figure 3, the connection portion 22 has a pass-through slot 23, the first jaw 31 has a first pass-through hole 33 and the second jaw 32 has a second pass-through hole 34. Thus the screw 5 can pass through the second hole 34, the slot 23, the first hole 33 and the ferrule 4 in this order, and engage a corresponding threaded seat formed on the outer surface of the pan, coupling the second jaw 32, the connection portion 22, the first jaw 31, the ferrule 4 and the pan.

More in detail, the abutment surface of the second jaw 32 has a cylindrically shaped protruding portion 35 which, when the connection portion 22 is clamped between the first jaw 31 and the second jaw 32, fits into the slot 23 until it almost abuts against the first jaw 31. The second hole 34 is formed along this protruding portion 35, so that when the screw 5 passes through the second hole 34 and the slot 23, the connection portion 22 is also protected from the heat radiated by the screw 5 passing through the slot. In fact, as the screw 5 is metallic, it can heat up considerably by conduction when using the pan.

Preferably the protruding portion 35 protrudes from the bottom of the housing seat 322.

Referring to Figures 4 and 5, the surface of the first jaw 31 that is intended to face in use the second jaw 32 (hereinafter referred to as the abutment surface of the first jaw 31) has a protruding first pin 36 and a protruding second pin 37 arranged at opposite sides of the first hole 33 and configured to fit, when the first jaw 31 and the second jaw 32 clamp the connection portion 22, into respectively a first seat 38 and a second seat 39 formed on the abutment surface of the second jaw 32. These pins 36, 37 act as guides, facilitating assembly operations, and reduce the transverse slack between the first jaw 31 and the second jaw 32 when clamping the connection portion 22 between them.

Referring to Figures 5 and 6, the abutment surface of the second jaw 32 comprises a first rib 320 and a second rib 321 arranged at the sides of the protruding portion 35 and configured to abut directly on the connection portion 22 of the grip element 2 when said connection portion 22 is clamped between the first jaw 31 and the second jaw 32. Preferably, the ribs 320, 321 protrude from the bottom of the housing seat 322.

These ribs 320, 321, being preferably wedge-shaped, define two well-defined contact points between the second jaw 32 and the connection portion 22, reducing the longitudinal slack of the handle 1 once assembled. Furthermore, by clamping the connection portion 22 between the first jaw 31 and the second jaw 32, the ribs 320, 321 cause a limited compression deformation of the connection portion 22, further reducing the slack of the coupling.

Referring to Figure 5, the first jaw 31 has an end portion 310 intended to be adjacent to the pan when the handle 1 is coupled to the pan. This end portion 310 is configured to be enclosed by the ferrule 4 with heatprotection function, and has a recess 311 wherein the first hole 33 is obtained; the recess 311 allows the threaded seat of the pan to be housed when the handle 1 is coupled to the pan itself, as this threaded seat usually consists of a threaded nut fixed to the outer surface of the pan.

Referring to Figure 7, the handle 1 is shown in a second embodiment, adapted to be coupled to a pot. This second embodiment differs from the first embodiment substantially only in the shape of the grip portion 21 of the grip element 2, while all the other elements described above in relation to the first embodiment are also identically reproduced in the second embodiment. In fact, also in this second embodiment, the handle 1 comprises a grip element 2 made of a thermoplastic polymer and comprising a grip portion 21 that can be grasped and a connection portion (not visible as it is enclosed by the protection element 3), a protection element 3 made of a thermosetting polymer and comprising a first jaw 31 and a second jaw 32, a metal ferrule (not shown), and a screw 5 configured to couple the second jaw 32, the connection portion, the first jaw 31 and the ferrule to the pot.

It is therefore clear that the handle 1 according to the invention achieves the intended objects. In particular, the handle 1 is durable and safe to use, as the thermoplastic polymer parts most at risk of being damaged from excessive heating (i.e. those intended to be close to the cooking container and, in use, to the cooker) are enclosed and protected by the protection element 3, made of a thermosetting, and thus thermally insulating, polymer. The handle 1 is also cost-effective to manufacture, as the grip element 2 made of a thermoplastic polymer, which accounts for up to 80% of the weight of the handle 1, can be made from recycled material.

Finally, advantageously, once the service life of the cooking container is over, the various parts of the handle 1 can be uncoupled from the container by simply unscrewing the screw 5: thus, the grip element 2 can be recycled, while the protection element 3 alone needs to be disposed of as undifferentiated waste.

The present invention has been described by way of a non-limiting illustrative example according to preferred embodiments thereof, however, it is understood that variations and/or modifications may be made by a person skilled in the art, without thereby departing from the relative scope of protection, as defined in the attached claims.

## Claims

1. Handle (1) for a cooking container, comprising a grip element (2) made of a thermoplastic polymer and a protection element (3) made of a thermosetting polymer, said grip element (2) having a grip portion (21) configured to be grasped and a connection portion (22) that can be reversibly coupled to said protection element (3) in such a way that said connection portion (22) is enclosed by said protection element (3), said protection element (3) being configured to be reversibly coupled to said container.

2. Handle (1) according to claim 1, **characterised in that** said protection element (3) comprises a first jaw (31) and a second jaw (32) configured to clamp said connection portion (22) between them when said protection element (3) is coupled to said grip element (2) .

3. Handle (1) according to claim 2 **characterised in that** said connection portion (22) has a pass-through slot (23), said first jaw (31) has a first pass-through hole (33), said second jaw (32) has a second pass-through hole (34), said handle (1) comprising a screw (5) configured to couple said first jaw (31), said connection portion (22) and said second jaw (32) to each other engaging said first hole (33), said slot (23) and said second hole (34), said screw (5) preferably also being configured to couple said first jaw (31), said connection portion (22) and said second jaw (32) to said container.

4. Handle (1) according to claim 3 **characterised in that** said second hole (34) is formed in a protruding portion (35) of said second jaw (32), said protruding portion (35) being configured to fit into said slot (23) when said first jaw (31) and second jaw (32) clamp said connection portion (22).

5. Handle (1) according to any one of claims 2 to 4, **characterised in that** said second jaw (32) comprises at least one first rib (320) configured to abut with said connection portion (22) when said first jaw (31) and second jaw (32) clamp said connection portion (22).

6. Handle (1) according to any one of claims 2 to 5, **characterised in that** said first jaw (31) has a first pin (36) configured to fit into a corresponding first seat (38) formed on said second jaw (32) when said first jaw (31) and second jaw (32) clamp said connection portion (22).

7. Handle (1) according to claim 6, when dependent on any one of claims 3 or 4, **characterised in that** said first jaw (31) has a second pin (37) arranged at the opposite side of said first hole (33) with respect to said first pin (36) and configured to fit into a corresponding second seat (29) formed on said second jaw (32) when said first jaw (31) and second jaw (32) clamp said connection portion (22).

8. Handle (1) according to any one of the preceding claims, **characterised in that** said protection element (3) comprises a housing seat (322) configured to form-fitting house said connection portion (22) enclosing it when said connection portion (22) is coupled to said protection element (3).

9. Handle (1) according to any one of the preceding claims, **characterised in that** said protection element (3) is made of Bakelite.

10. Handle (1) according to any one of the preceding claims, **characterised in that** it comprises a ferrule (4) configured to enclose an end portion (310) of said protection element (3) adjacent to said container when said protection element (3) is connected to said container.
